# DEMANDE DE BREVET EUROPEEN

(11) **EP 2 236 367 A1**
(43) Date de publication de la demande: **06.10.2010**
(21) Numéro de dépôt: 10158436.5
(22) Date de dépôt: 30.03.2010
(51) Int. Cl.: B60S 1/50, G01F 23/02

(54) **Vehicule automobile comprenant un reservoir de liquide lave-glace**

(30) Priorité: 02.04.2009 FR 0952123
(71) Demandeur: Peugeot Citroën Automobiles SA, 78140 Vélizy-Villacoublay (FR)
(72) Inventeur: Leroux, Charles, 78830, BULLION (FR)

(57) **Abrégé**

L'invention se rapporte à un véhicule automobile (1) comprenant une paroi (22) de réservoir (3) de liquide lave-glace sur laquelle le niveau du réservoir (3) est visible et qui est disposée dans l'encadrement (17) d'une des portes (19) latérales du véhicule (1). Selon l'invention, l'orifice (13) de remplissage dudit réservoir est également disposé dans ledit encadrement de porte latérale.

L'invention trouve son application notamment dans le domaine des véhicules à capot fixe.

## Description

L'invention concerne un réservoir de liquide de lave-glace. L'invention concerne plus particulièrement l'orifice de remplissage du réservoir. L'invention trouve notamment son application dans le domaine des véhicules à capot fixe.

Les véhicules automobiles comprennent un certain nombre de surfaces vitrées. Ces surfaces comprennent notamment le pare-brise et la lunette arrière qui sont des surfaces qui doivent être propres pour permettre au conducteur d'avoir une bonne visibilité et assurer ainsi une bonne sécurité lors de la conduite. Néanmoins, elles peuvent être souillées par exemple par des insectes, des oiseaux ou de la poussière. Le pare-brise, qui est la surface vitrée la plus importante en termes de visibilité pour le conducteur, est, de par sa position avancée sur le véhicule, la surface la plus exposée aux salissures lorsque le véhicule roule. Pour toutes ces raisons, il est important de pouvoir nettoyer ces surfaces vitrées.

Pour cela, il est prévu d'avoir un liquide lave-glace sur le véhicule qui peut être vaporisé sur la surface du pare-brise par l'intermédiaire d'une commande du conducteur du véhicule. Cette action de vaporisation, suivie ou combinée à la mise en action des essuie-glaces, permet de nettoyer la vitre.

Le liquide de lave-glace est stocké dans un réservoir qui peut être rempli par l'utilisateur du véhicule lorsque le réservoir est vide. Pour cela, le réservoir est muni d'un orifice de remplissage. Dans l'état de la technique, ce réservoir est situé sous le capot du véhicule, à proximité du pare-brise. Cet emplacement n'est pas pratique pour l'utilisateur, notamment pour deux raisons.

Premièrement, l'utilisateur du véhicule n'a pas d'indication directe lui permettant de savoir s'il reste encore du liquide lave-glace dans le réservoir. Il se rend compte qu'il manque du liquide dans le réservoir seulement lorsqu'il souhaite nettoyer son pare-brise. Lorsqu'il actionne la commande permettant la vaporisation, aucun liquide ne sort. Il est alors trop tard et la vitre souillée ne peut être immédiatement nettoyée. Si le véhicule est en train de rouler, il est impossible de remédier au problème en temps réel, ce qui peut engendrer des problèmes de sécurité si la visibilité est entravée par les salissures.

Deuxièmement, pour remplir le réservoir, ou pour visualiser le niveau de liquide de lave-glace restant, l'utilisateur doit ouvrir le capot de son véhicule. Ceci implique des manipulations qui ne sont pas toujours aisées ni habituelles pour un conducteur de véhicule. Pour ouvrir son capot, l'utilisateur doit agir sur une commande intérieure qui permet de déverrouiller le capot. Il doit ensuite déplacer un loquet situé sous le capot dans une partie non visible permettant de désolidariser le capot de la structure du véhicule puis soulever le capot. Il doit enfin bloquer le capot en position ouverte à l'aide d'une béquille pour pouvoir accéder au réservoir.

Ces opérations ne font pas partie des opérations que le conducteur est amené à faire au quotidien. Ces opérations peuvent également être délicates à effectuer lorsque le véhicule est stationné dans une place de parking qui offre peu de dégagement vers l'avant du véhicule. De plus, l'accès à l'orifice de remplissage peut être parfois malaisé car l'orifice est souvent placé à un endroit difficile à atteindre car il est situé trop près de la charnière du capot.

Enfin, certains véhicules peuvent être équipés d'un capot fixe, c'est-à-dire un capot que l'utilisateur du véhicule ne peut ouvrir mais qui peut néanmoins être démonté par un garagiste pour des besoins de maintenance. Dans ce cas, l'utilisateur du véhicule ne peut ni vérifier le niveau de liquide lave-glace, ni emplir le réservoir.

Le but de la présente invention est de rendre facilement accessible à l'utilisateur le réservoir de liquide de lave-glace sur un véhicule automobile.

A cet effet, l'invention concerne un véhicule automobile comprenant une paroi de réservoir de liquide lave-glace sur laquelle le niveau du réservoir est visible et qui est disposée dans l'encadrement d'une des portes latérales du véhicule **caractérisé en ce que** l'orifice de remplissage dudit réservoir est également disposé dans ledit encadrement de porte latérale.

De cette façon, on peut vérifier le niveau de liquide de lave-glace simplement en ouvrant la porte du véhicule. Quand ce niveau est bas, l'orifice de remplissage du réservoir de lave-glace est immédiatement accessible. Ces opérations ne nécessitent pas d'ouvrir le capot du véhicule.

De préférence, ladite paroi est translucide ou transparente ou comprenant une fenêtre de visibilité.

De cette façon, lorsqu'on remplit le réservoir derrière la porte, on visualise immédiatement le niveau de lave-glace.

De préférence, ladite paroi de réservoir est graduée.

De cette façon, lorsqu'on remplit le réservoir derrière la porte, on visualise immédiatement le volume de lave-glace versé.

Avantageusement, la graduation et l'orifice se trouvent sur le montant avant de l'encadrement.

La visualisation du niveau est plus facile lorsque le réservoir est en train d'être rempli.

Avantageusement, la graduation et l'orifice sont situés l'un à côté de l'autre.

De préférence, le réservoir est disposé dans l'aile avant du véhicule de manière à permettre le passage de faisceaux électriques sous le réservoir.

Des répétiteurs latéraux de clignotant sont situés sur les ailes avant du véhicule et nécessitent par conséquent une alimentation électrique. Pour cela, les faisceaux de câbles électriques cheminent derrière les ailes avant du véhicule. Le réservoir a une forme qui permet de laisser ces faisceaux passer.

De préférence, le réservoir a une forme allongée horizontalement par rapport au véhicule.

Avantageusement, le réservoir comprend une goulotte à l'extrémité libre de laquelle se trouve l'orifice de remplissage.

De cette façon, le réservoir peut être placé à une certaine distance du montant de l'encadrement et permet de laisser de la place pour d'autres éléments comme le faisceau électrique par exemple. Dans ce cas, la goulotte peut également avoir une paroi translucide ou transparente. Elle peut en outre être graduée.

Avantageusement, le véhicule comprend un capot démontable mais non ouvrant.

D'autres particularités et avantages ressortiront clairement de la description qui en est faite ci-après, à titre indicatif et nullement limitatif, en référence aux dessins annexés, dans lesquels :
- la figure 1 est une vue en coupe d'un véhicule muni d'un réservoir ;
- la figure 2 montre un montant de l'encadrement de la porte et une paroi du réservoir ;
- la figure 3 est une vue en coupe de l'avant d'un véhicule muni d'un réservoir ayant une forme allongée et plane.

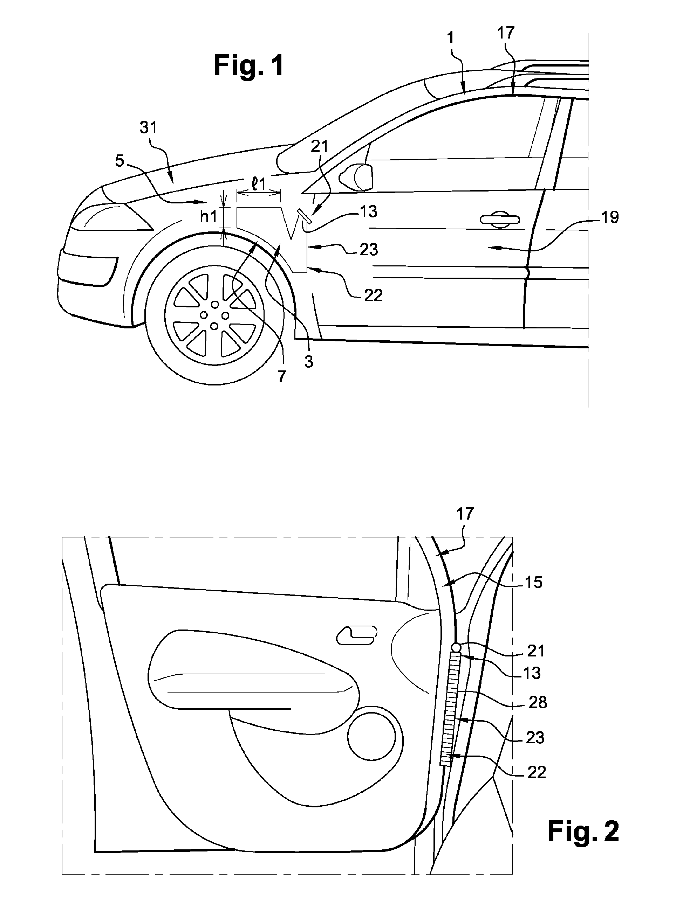

La figure 1 montre un véhicule 1 équipé d'un réservoir 3 de liquide de lave-glace. Le réservoir 3 de liquide de lave-glace est situé derrière l'aile avant 5 du véhicule 1 et au-dessus du passage 7 de roue.

Le réservoir 3 peut présenter différentes formes géométriques.

Sur la figure 1, le réservoir 3 représenté a une forme de parallélépipède dont la hauteur h1 et la longueur L1 sont sensiblement équivalentes.

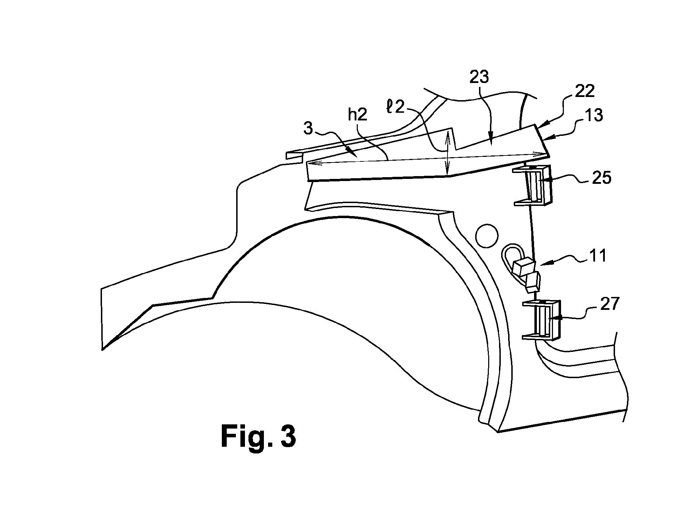

Sur la figure 3, le réservoir 3 présente une forme plane et allongée avec une hauteur h2 très inférieure à la longueur L2 et à la largeur. De cette manière, il reste de la place sous le réservoir 3 et le volume libéré 9 permet de positionner d'autres éléments à cet endroit, notamment le faisceau électrique 11 pour les répétiteurs de clignotant latéraux.

Le réservoir 3 comprend un orifice de remplissage 13.

L'orifice 13 du réservoir 3 est orienté du côté du montant 15 de l'encadrement 17 de la porte avant 19 du véhicule 1. L'orifice 13 se situe de préférence sur la partie supérieure du montant 15 de l'encadrement 17 de la porte 19 de façon à être à une hauteur permettant à l'utilisateur de remplir son réservoir sans avoir à se pencher en avant pour ce faire. L'orifice 13 de remplissage se situe plutôt entre les charnières de la porte 19 sur le montant 15 de l'encadrement 17 de la porte 19.

L'orifice 13 est refermé par un bouchon 21 comme visible à la figure 1. Le bouchon 21 peut être fermé par vissage par exemple sur l'orifice 13. La fermeture et l'ouverture du réservoir peuvent également être réalisées par une action « push-pull » qui consiste à ouvrir le réservoir par une action de pression sur le bouchon, puis une action d'enlèvement du bouchon et inversement pour fermer le réservoir.

Une partie de la paroi 22 du réservoir 3 est visible par l'utilisateur. Cette partie de paroi 22 se trouve dans le prolongement du montant 15 de l'encadrement 17. La paroi 22 est réalisée en matériau translucide ou transparent de façon à laisser voir le liquide à l'intérieur et une ouverture est ménagée dans le montant 15 de l'encadrement 17 de la porte 19 pour pouvoir visualiser une partie de la paroi du réservoir 3 lorsqu'on ouvre la porte 19. Selon un deuxième mode de réalisation non représenté, la totalité du réservoir 3 peut être réalisée dans un tel matériau. Selon un troisième mode de réalisation non représenté, une fenêtre de visibilité est ménagée sur la paroi 22 pour laisser voir le niveau de liquide de lave-glace.

Le réservoir 3 peut présenter des graduations 29 (voir figure 2) pour mieux connaitre le volume de liquide de lave-glace restant.

Selon la figure 1 et la figure 3, le réservoir 3 comprend une goulotte 23. Elle est située entre l'aile avant 5 du véhicule 1 et le montant avant 15 de l'encadrement 17 de porte 19. La goulotte 23 relie le réservoir 3 proprement dit et l'orifice 13 de remplissage. La goulotte 23 est située derrière les charnières 25 et 27 de la porte 19 et derrière le montant 15 de l'encadrement 17 de la porte. La goulotte 23 est de préférence située au-dessus de la charnière 25 de porte ou juste en-dessous.

La goulotte 23 peut être réalisée en matériau translucide ou transparent. Elle est de préférence visible sur toute sa hauteur lorsque la porte 19 du véhicule 1 est ouverte de manière à visualiser directement le niveau du liquide de lave-glace.

Les graduations 29 (voir figure 2) peuvent être placées sur la goulotte 23 du réservoir 3.

Selon un autre mode de réalisation (non illustré) dans lequel le réservoir 3 ne comprend pas de goulotte, les graduations peuvent de trouver directement sur la paroi du réservoir qui est transparente ou translucide. Elle peut également être graduée. Dans ce mode de réalisation, cette paroi doit être située derrière une ouverture ménagée dans le montant de l'encadrement de porte.

D'autres avantages du réservoir de liquide de lave-glace et son orifice de remplissage selon l'invention sont listés ci-après :
- le fait d'installer dans l'entrée de porte avant le réservoir et l'orifice de remplissage du liquide de lave-glace permet d'en protéger l'accès lorsque la porte est fermée et verrouillée et d'y avoir facilement accès lorsque la porte est ouverte ;
- le réservoir pourrait être combiné au boîtier de dégazage pour réchauffer le liquide de lave-glace ;
- dans le cas d'une aile de véhicule automobile composite, le réservoir peut y être directement intégré, constituant ainsi un module unique ;
- le réservoir et l'orifice de remplissage selon l'invention sont particulièrement utiles pour des véhicules à capot fixe.

## Revendications

1. Véhicule automobile comprenant une paroi (22) de réservoir (3) de liquide lave-glace sur laquelle le niveau du réservoir (3) est visible et qui est disposée dans l'encadrement (17) d'une des portes latérales du véhicule (1), **caractérisé en ce que** l'orifice (13) de remplissage dudit réservoir est également disposé dans ledit encadrement de porte latérale.

2. Véhicule automobile selon la revendication 1 **caractérisé en ce que** ladite paroi (22) est translucide ou transparente ou comprenant une fenêtre de visibilité.

3. Véhicule automobile selon l'une des revendications 1 ou 2 **caractérisé en ce que** ladite paroi (22) de réservoir est graduée (29).

4. Véhicule automobile selon la revendication 3 **caractérisé en ce que** la graduation (29) et l'orifice (13) se trouvent sur le montant avant de l'encadrement.

5. Véhicule automobile selon l'une des revendications 3 ou 4 **caractérisé en ce que** la graduation (29) et l'orifice (13) sont situés l'un à côté de l'autre.

6. Véhicule automobile selon l'une des revendications précédentes **caractérisé en ce que** le réservoir est disposé dans l'aile avant (5) du véhicule de manière à permettre le passage de faisceaux électriques (11) sous le réservoir (3).

7. Véhicule automobile selon l'une quelconque des revendications précédentes **caractérisé en ce que** le réservoir a une forme allongée horizontalement par rapport au véhicule.

8. Véhicule automobile selon la revendication 7 **caractérisé en ce que** le réservoir (3) a une forme allongée horizontalement par rapport au véhicule (1).

9. Véhicule automobile selon l'une des revendications précédentes **caractérisé en ce que** le réservoir comprend une goulotte (23) à l'extrémité libre de laquelle se trouve l'orifice (13) de remplissage.

10. Véhicule automobile selon l'une des revendications précédentes **caractérisé en ce que** le véhicule (1) comprend un capot (31) démontable mais non ouvrant.
